# EUROPEAN PATENT APPLICATION

(11) **EP 4 557 152 A1**
(43) Date of publication of application: **21.05.2025**
(21) Application number: 24212827.0
(22) Date of filing: 13.11.2024
(51) Int. Cl.: G06F 21/74

(54) **METHOD AND APPARATUS FOR CROSS-DOMAIN ACCESS, DEVICE, AND MEDIUM**

(30) Priority: 14.11.2023 CN 202311520374
(71) Applicant: Beijing Horizon Information Technology Co., Ltd., Beijing 100094 (CN)
(72) Inventor: ZHAO, Huayi, Beijing 100094 (CN); XU, Shengjian, Beijing 100094 (CN); SHI, Zhaohui, Beijing 100094 (CN)
(74) Representative: Dehns Germany Partnerschaft mbB

(57) **Abstract**

Disclose are a method and an apparatus for cross-domain access, a device, and a medium. The method includes: transmitting an access request of a first component at a first security level to a second component at a second security level; detecting a bus transmission status of the second; generating an interrupt signal based on the bus transmission status, taking a preset result indicating the bus transmission status is in a preset status as an access result corresponding to the access request transmitted by the second component; performing exception handling corresponding to the interrupt signal, to restore access of the first component to the second. The access request of the first component can be ended normally, while no exception occurs due to effects of an exception of the bus transmission status of the second component; exception handling can be performed to restore cross-domain access of the first component to the second.

## Description

### FIELD OF THE INVENTION

This disclosure relates to the technical field of semiconductors, and in particular, to a method and an apparatus for cross-domain access, a device, and a medium.

### BACKGROUND OF THE INVENTION

In fields such as autonomous driving and assisted driving, functional safety is a factor that must be considered for in-vehicle chips. Various functions of an in-vehicle chip are usually classified into different functional safety levels according to dangers to operation of a vehicle, such as an automotive safety integrity level (ASIL). Further, the various functions are classified into different functional safety domains according to the functional safety levels of the various functions. A function with a high security level (which may also be referred to as a system in a high security level domain) ensures normal and safe operation of the vehicle. In practical applications, a function in a high security level domain usually needs to access relevant data of a function with a low security level (which may be referred to as a system in a low security level domain). In other words, cross-domain access is required. In related technologies, due to frequent cross-domain access between a high security level domain and a low security level domain, if an exception (such as hanging) occurs to a bus in the low security level domain, it is likely to cause exceptions to a bus in the high security level domain and to a component that initiates the cross-domain access, which may easily lead to system exceptions in the high security level domain.

### SUMMARY OF THE INVENTION

To resolve the foregoing technical problem that an exception in a system in a low security level domain may easily cause an exception in a system in a high security level domain, embodiments of this disclosure disclose a method and an apparatus for cross-domain access, a device, and a medium, so as to ensure normal operation of the system in the high security level domain when a bus exception occurs to the system in the low security level domain, thereby avoiding exceptions in the system in the high security level domain.

According to a first aspect of this disclosure, a method for cross-domain access is provided, including: transmitting an access request of a first component at a first security level to a second component at a second security level; detecting a bus transmission status of the second component; generating an interrupt signal based on the bus transmission status, and taking a preset result indicating that the bus transmission status is in a preset status as an access result corresponding to the access request transmitted by the second component; and performing exception handling corresponding to the interrupt signal, to restore access of the first component to the second component.

According to a second aspect of this disclosure, an apparatus for cross-domain access is provided, including: a transmission module, configured to transmit an access request of a first component at a first security level to a second component at a second security level; a first detection module, configured to detect a bus transmission status of the second component; a first response module, configured to generate an interrupt signal based on the bus transmission status, and take a preset result indicating that the bus transmission status is in a preset status as an access result corresponding to the access request transmitted by the second component; and a processing module, configured to perform exception handling corresponding to the interrupt signal, to restore access of the first component to the second component.

According to a third aspect of this disclosure, a computer readable storage medium is provided. The storage medium stores a computer program, and the computer program is used for implementing the method for cross-domain access according to any one of the foregoing embodiments of this disclosure.

According to a fourth aspect of this disclosure, an electronic device is provided. The electronic device includes: a processor; and a memory configured to store processor-executable instructions. The processor is configured to read the executable instructions from the memory, and execute the instructions to implement the method for cross-domain access according to any one of the foregoing embodiments of this disclosure.

According to a fifth aspect of this disclosure, a computer program product is provided. When instructions in the computer program product are executed by a processor, the method for cross-domain access according to any one of the foregoing embodiments of this disclosure implemented.

Based on the method and the apparatus for cross-domain access, the device, and the medium that are provided in the foregoing embodiments of this disclosure, during cross-domain access, after the access request of the first component at the first security level is transmitted to the second component at the second security level, the bus transmission status of the second component may be detected; the interrupt signal may be generated based on the bus transmission status; and the preset result indicating that the bus transmission status is in the preset status may be taken as the access result corresponding to the access request. In this case, it is ensured that the access request of the first component at the first security level can be ended normally, while no exception occurs due to effects of an exception of the bus transmission status of the second component; and corresponding exception handling may be performed to restore cross-domain access of the first component to the second component, thereby effectively ensuring functional safety of the first component.

### BRIEF DESCRIPTION OF THE DRAWINGS

FIG. 1 is an exemplary application scenario of a method for cross-domain access according to this disclosure;
FIG. 2 is a schematic flowchart of a method for cross-domain access according to an exemplary embodiment of this disclosure;
FIG. 3 is a schematic flowchart of a method for cross-domain access according to another exemplary embodiment of this disclosure;
FIG. 4 is a schematic flowchart of a method for cross-domain access according to still another exemplary embodiment of this disclosure;
FIG. 5 is a schematic flowchart of a method for cross-domain access according to yet another exemplary embodiment of this disclosure;
FIG. 6 is a schematic flowchart of a method for cross-domain access according to still yet another exemplary embodiment of this disclosure;
FIG. 7 is a flow block diagram of cross-domain access according to an exemplary embodiment of this disclosure;
FIG. 8 is a schematic diagram of a structure of an apparatus for cross-domain access according to an exemplary embodiment of this disclosure;
FIG. 9 is a schematic diagram of a structure of an apparatus for cross-domain access according to another exemplary embodiment of this disclosure;
FIG. 10 is a schematic diagram of a structure of an apparatus for cross-domain access according to still another exemplary embodiment of this disclosure;
FIG. 11 is a schematic diagram of a structure of an apparatus for cross-domain access according to yet another exemplary embodiment of this disclosure;
FIG. 12 is a schematic diagram of a structure of an apparatus for cross-domain access according to still yet another exemplary embodiment of this disclosure;
FIG. 13 is a schematic diagram of a structure of a first subcomponent according to an exemplary embodiment of this disclosure;
FIG. 14 is a schematic diagram of a structure of a first subcomponent according to another exemplary embodiment of this disclosure; and
FIG. 15 is a diagram of a structure of an electronic device according to an embodiment of this disclosure.

### DETAILED DESCRIPTION OF THE EMBODIMENTS

To explain this disclosure, exemplary embodiments of this disclosure are described below in detail with reference to accompanying drawings. Obviously, the described embodiments are merely a part, rather than all of embodiments of this disclosure. It should be understood that this disclosure is not limited by the exemplary embodiments.

It should be noted that unless otherwise specified, the scope of this disclosure is not limited by relative arrangement, numeric expressions, and numerical values of components and steps described in these embodiments.

### Overview of this disclosure

In a process of implementing this disclosure, the inventor finds that in fields such as autonomous driving and assisted driving, functional safety is a factor that must be considered for in-vehicle chips. Various functions of an in-vehicle chip are usually classified into different functional safety levels according to dangers to operation of a vehicle, such as an automotive safety integrity level (ASIL). Further, the various functions are classified into different functional safety domains according to the functional safety levels of the various functions. A function with a high security level (which may also be referred to as a system in a high security level domain) ensures normal and safe operation of the vehicle. In practical applications, a function in a high security level domain usually needs to access relevant data of a function with a low security level (which may be referred to as a system in a low security level domain). In other words, cross-domain access is required. In related technologies, due to frequent cross-domain access between a high security level domain and a low security level domain, if an exception (such as hanging) occurs to a bus in the low security level domain, it is likely to cause exceptions to a bus in the high security level domain and to a component that initiates the cross-domain access, which may easily lead to system exceptions in the high security level domain.

### Exemplary overview

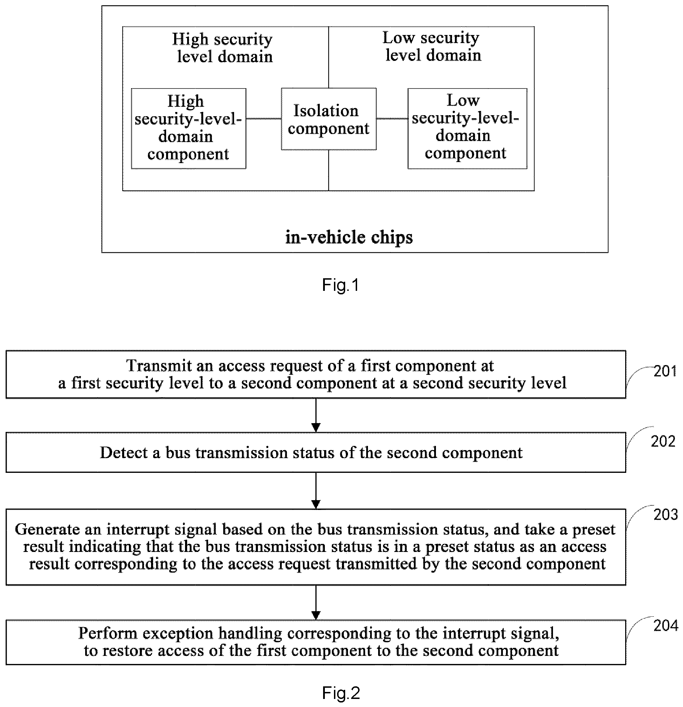

FIG. 1 is an exemplary application scenario of a method for cross-domain access according to this disclosure.

As shown in FIG. 1, in in-vehicle chips in fields such as autonomous driving and assisted driving, a component in a high security level domain (that is, a high security-level-domain component) generally needs to perform cross-domain access to a component in a low security level domain (that is, a low security-level-domain component). The high security-level-domain component may include, for example, a processor in the high security level domain, a DMA (direct memory access) controller, ETH (Ethernet), an XSPI (eXpanded serial peripheral interface), other related components having a cross-domain access capability, and other related components. The low security-level-domain component may include a processor in the low security level domain, a DMA controller, and other related components. By using the method for cross-domain access in this disclosure, an isolation component may be disposed between the high security-level-domain component and the low security-level-domain component. The isolation component may be implemented by using at least one of software and hardware. The isolation component is separately connected to the high security-level-domain component and the low security-level-domain component. Alternatively, the isolation component includes two parts, wherein one part is disposed in the high security-level-domain component, and the other part is disposed in the low security-level-domain component. The isolation component may transmit an access request of the high security-level-domain component (that is, a first component at a first security level) to a second component at a second security level (that is, the low security-level-domain component); may detect a bus transmission status of the second component; and generate an interrupt signal based on the bus transmission status, and take a preset result indicating that the bus transmission status is in a preset status as an access result corresponding to the access request transmitted by the second component. The first component may perform exception handling corresponding to the interrupt signal, to restore access of the first component to the second component. When bus transmission of the second component bus is in the preset status (such as being abnormal), the preset result may be taken as the access result corresponding to the access request, so that the access request of the first component may be responded to normally. Therefore, current cross-domain access may be ended normally, while no exception occurs because no response is received from the second component. In this way, normal operation of the first component may be ensured, which facilitates subsequent exception handling of the first component, so as to restore the cross-domain access of the first component to the second component in a timely manner, thereby effectively ensuring functional safety of the first component and further improving safety of vehicle driving.

The method for cross-domain access in this disclosure is not limited to the foregoing fields or scenarios of autonomous driving and assisted driving, but may also be applicable to any other field or scenario of cross-domain access that needs to meet different functional safety requirements.

### Exemplary method

FIG. 2 is a schematic flowchart of a method for cross-domain access according to an exemplary embodiment of this disclosure. This embodiment may be applicable to an electronic device, such as an in-car computing platform. As shown in FIG. 2, the method includes the following steps.

Step 201. Transmit an access request of a first component at a first security level to a second component at a second security level.

In some optional embodiments, the first security level is higher than the second security level. For example, the first security level is ASIL D, while the second security level is any level of ASIL QM (quality management), ASIL A, ASIL B, and ASIL C. Alternatively, the first security level is ASIL C, while the second security level is ASIL QM, ASIL A, or ASIL B. Alternatively, the first security level is ASIL B, while the second security level is ASIL QM, ASIL A, or the like.

In some optional embodiments, the first component may include a component in a domain (which may be referred to as a first security level domain) corresponding to the first security level. The first component may include, for example, one or more of a processor, a DMA controller, and other related components (such as a register and a memory) in the first security level domain. Similarly, the second component may include a component in a domain (that is, a second security level domain) corresponding to a second security level.

In some optional embodiments, the access request of the first component may be initiated by a component having a cross-domain access capability in the first component, such as the processor, the DMA controller, ETH, or an XSPI.

In some optional embodiments, an isolation component may be disposed between the first component and the second component, to transmit the access request of the first component to the second component. The isolation component may be implemented based on software, hardware, or a combination of software and hardware. For example, to ensure real-time performance, the isolation component may be implemented based on hardware.

In some optional embodiments, the isolation component may include a first part (which may be referred to as the first subcomponent) disposed on a side of the first component side and a second part (which may be referred to as the second subcomponent) disposed on a side of the second component. The first part communicates with the second part through a certain communication protocol. The communication protocol may be any implementable bus protocol, such as an AXI (advanced eXtensible interface) protocol or an APB (advanced peripheral bus) protocol. The first part may serve as a part of the first component. In other words, the first component includes the first part, which may also be independent of and connected to the first component. The first part may also include a hardware part independent of and connected to the first component, and a software part implemented by the processor in the first component. The second part may serve as a part of the second component (that is, the second component includes the second part). The second part may also be a part independent of and connected to the second component. A relationship between the first part and the first component, and a relationship between the second part and the second component may be set according to actual requirement, which are not limited in the embodiments of this disclosure. The first part is configured to send the access request of the first component to the second part. The second part sends the access request to a component in the second component, for example, sends the access request to a processor, a memory, or the like in the second component, to achieve cross-domain access.

Step 202. Detect a bus transmission status of the second component.

In some optional embodiments, the bus transmission status may include two statuses: normal and abnormal. For a situation in which the second component cannot normally transmit an access result corresponding to the access request of the first component due to any reason, it is determined that the bus transmission status of the second component is abnormal. For example, if a bus of the second component cannot transmit data normally because the bus of the second component hangs, the second component is not started or fails to be started, and due to various other possible reasons, it is determined that the bus transmission status of the second component is abnormal.

In some optional embodiments, the bus transmission status of the second component may be detected by detecting a timeout situation of an acknowledgment signal indicating completion of transmission that is returned by the second component. For example, after the access request is transmitted to the second component, timing starts, and it is detected whether the acknowledgment signal indicating completion of transmission that is returned by the second component has been received. If the acknowledgment signal is received within the preset time, it indicates that the bus transmission status of the second component is normal. If the acknowledgment signal is not received within the preset time, it indicates that the acknowledgment signal of the second component is timed out, and it is determined that the bus transmission status of the second component is abnormal.

In some optional embodiments, the timeout situation of the acknowledgment signal indicating completion of transmission that is returned by the second part may be detected by the first part in the isolation component. The second component communicates with the second part, which is responsible for sending the data transmitted by the bus of the second component to the first part, and sending the acknowledgment signal to the first part after the transmission is completed. If the bus transmission status of the second component is abnormal, the second part cannot send the acknowledgment signal to the first part. The first part may determine the bus transmission status of the second component by detecting the timeout situation of the acknowledgment signal.

Step 203. Generate an interrupt signal based on the bus transmission status, and take a preset result indicating that the bus transmission status is in a preset status as an access result corresponding to the access request transmitted by the second component.

In some optional embodiments, if it is detected that the bus transmission status of the second component is in the preset status, the interrupt signal may be generated, and the preset result indicating that the bus transmission status is in the preset status may be taken as the access result corresponding to the access request transmitted by the second component. The preset status may be determined according to a preset detection rule. The preset detection rule may include, for example, whether a protocol signal of the second component is received within the preset time. The protocol signal is, for example, an acknowledgment signal indicating completion of single transmission.

In some optional embodiments, the abnormal bus transmission status is taken as the preset status. To be specific, if the bus transmission status of the second component is abnormal, it indicates that the bus of the second component is abnormal and cannot transmit the access result corresponding to the access request. To avoid exceptions in the first component, the interrupt signal may be generated, and the preset result indicating that the bus transmission status is abnormal may be taken as the access result corresponding to the access request transmitted by the second component. In other words, to enable the access request to be responded to and end the current access normally, the preset result is considered as the access result transmitted by the second component, and is returned to the component initiating the access request in the first component, for example, is returned to the processor initiating the access request in the first component. The processor receives the access result corresponding to the access request, and ends the current cross-domain access.

In some optional embodiments, a single access request may correspond to one or more access results, which is specifically determined based on a data address accessed by the access request and the transmission protocol. For example, if the access request accesses a large quantity of data addresses, the access request may need to be transmitted by the second component multiple times. After each transmission, the second component may send an acknowledgment signal indicating completion of transmission, and the first component may obtain an access result of single transmission. After the second component completes transmission multiple times, the first component obtains a final access result corresponding to the access request. During this process, if an acknowledgment signal indicating completion of any transmission is timed out, it may be determined that the bus transmission status of the second component is in the preset status (that is, being abnormal). The preset result is taken as an access result of this transmission and is returned to the component initiating the access request in the first component, and an acknowledgment signal indicating completion of next transmission is detected. If the acknowledgment signal is timed out, the preset result is continued to be used as an access result of the next transmission. The others are deduced by analogy, until access results respectively corresponding to multiple times of transmission are obtained. In this case, the cross-domain access corresponding to the access request is ended.

In some optional embodiments, the interrupt signal is used to enable the processor in the first component to respond to an interruption, and perform exception handling corresponding to the interrupt signal.

In some optional embodiments, the interrupt signal may be generated by the foregoing isolation component. The isolation component may send the interrupt signal to a fault processing module (which is also referred to as an error processing module), which notifies the processor in the first component to perform the exception handling corresponding to the interrupt signal. The fault processing module may be an independent module outside the first security level domain and the second security level domain, or may be a module within the first security level domain; this is not specifically limited.

Step 204. Perform exception handling corresponding to the interrupt signal, to restore access of the first component to the second component.

In some optional embodiments, the exception handling may include, for example: waiting for the end of the current cross-domain access corresponding to the access request and prohibiting new cross-domain access; restarting the second component or restarting the second security level domain to restore the bus transmission status of the second component; and enabling the second component to transmit normally, so as to restore the cross-domain access of the first component to the second component.

In some optional embodiments, the exception handling may be implemented by the processor in the first component.

According to the method for cross-domain access provided in the embodiments of this disclosure, during cross-domain access, after the access request of the first component at the first security level is transmitted to the second component at the second security level, the bus transmission status of the second component may be detected; the interrupt signal may be generated when it is detected that the bus transmission status of the second component is in the preset status; and the preset result indicating that the bus transmission status is in the preset status may be taken as the access result corresponding to the access request. In this case, it is ensured that the access request of the first component at the first security level can be ended normally, while no exception occurs due to effects of an exception of the bus transmission status of the second component; and corresponding exception handling may be performed to restore the cross-domain access of the first component to the second component, thereby effectively ensuring functional safety of the first component.

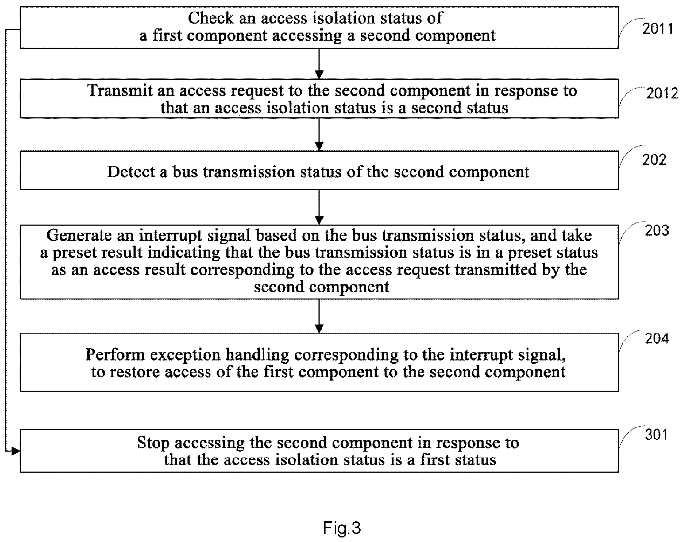

FIG. 3 is a schematic flowchart of a method for cross-domain access according to another exemplary embodiment of this disclosure.

In some optional embodiments, step 201 of transmitting the access request of the first component at the first security level to the second component at the second security level includes the following steps.

Step 2011. Check an access isolation status of the first component accessing the second component.

In some optional embodiments, the access isolation status may be determined by a recorded status value of the access isolation status. For example, two statuses may be represented by using two status values, and a specific access isolation status may be determined based on a currently recorded status value. For example, a status value of 1 indicates that the access isolation status is a first status, and a status value of 0 indicates that the access isolation status is a second status. The specific status value may be set according to actual requirements, and is not limited to the foregoing representations of 1 and 0. The first status indicates that it is in an isolation status and new cross-domain access is prohibited. The second status indicates that it is not in the isolation status and cross-domain access may be performed.

In some optional embodiments, the access isolation status may be stored by using an access isolation status register. The isolation status is entered each time an interrupt signal is generated, to set the access isolation status register to the first status. Each time the cross-domain access is restored, it is indicated that the isolation status is released, and the access isolation status register is set to the second status.

In some optional embodiments, the access isolation status may be maintained by the first component, specifically by the processor in the first component. The processor updates the access isolation status to the first status, in response to the interrupt signal, to prohibit new cross-domain access. After restoring the second component to restore the bus transmission status of the second component to normal, the processor updates the access isolation status to the second status. In this case, when checking before new-cross domain access, the new-cross domain access may be performed through the checking.

In some optional embodiments, step 2011 may be performed by the first component. Specifically, step 2011 may be performed by a target component to initiate the cross-domain access in the first component, such as the processor or the DMA controller.

Step 2012. Transmit the access request to the second component in response to that the access isolation status is a second status.

In some optional embodiments, if the access isolation status is the second status, it indicates that it is not currently in the isolation state, and the second component may be accessed across domains. The access request may be transmitted to the second component only in this case, to ensure that the cross-domain access can be implemented.

In some optional embodiments, in response to that the access isolation status is the second status, the target component in the first component that needs to initiate the cross-domain access transmits the access request to the second component, or the target component transmits the access request to the isolation component, which transmits the access request to the second component.

In some optional embodiments, the method in the embodiments of this disclosure further includes the followings step.

Step 301. Stop accessing the second component in response to that the access isolation status is a first status.

In some optional embodiments, if the access isolation status is the first status, it indicates that it is currently in the isolation state, and the cross-domain access is prohibited. Therefore, the access to the second component is stopped.

In some optional embodiments, if the target component to initiate the cross-domain access in the first component responds to that the access isolation status is the first status, transmission of the access request to the second component is stopped. In other words, the cross-domain access to the second component is also not performed.

According to the embodiments, checking the access isolation status before the cross-domain access is initiated may effectively avoid triggering of new cross-domain access in a case of a bus exception of the second component, so as to achieve access isolation between the first component and the second component, thereby ensuring that all cross-domain access initiated after the bus exception of the second component is prohibited. This helps to ensure normal operation of the first component, and avoid exceptions of the first component due to effects of the second component.

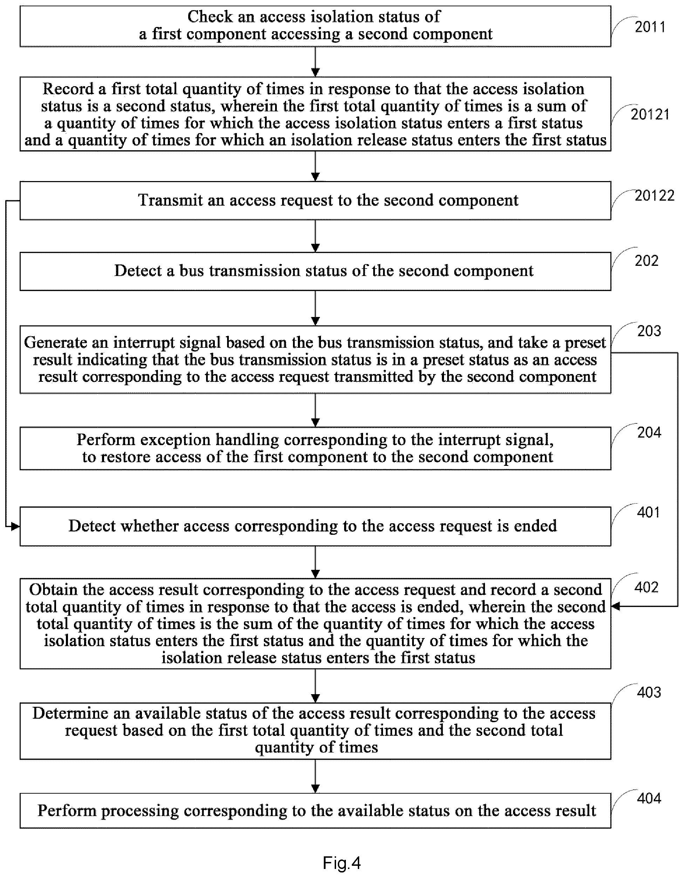

FIG. 4 is a schematic flowchart of a method for cross-domain access according to still another exemplary embodiment of this disclosure.

In some optional embodiments, step 2012 of transmitting the access request to the second component in response to that the access isolation status is the second status includes the following steps.

Step 20121. Record a first total quantity of times in response to that the access isolation status is the second status, wherein the first total quantity of times is a sum of a quantity of times for which the access isolation status enters the first status and a quantity of times for which an isolation release status enters the first status.

In some optional embodiments, that the access isolation status enters the first status refers to entering the isolation status, so as to prohibit new cross-domain access. That the isolation release status enters the first status indicates that isolation is released, and new cross-domain access may be performed.

In some optional embodiments, the access isolation status may also be switched from the first status to the second status, indicating that isolation is released. Switching the access isolation status from the second status to the first status indicates that the isolation status is entered. In this case, the first total quantity of times is a sum of a quantity of times for which the access isolation status is switched from the second status to the first status and a quantity of times for which the access isolation status is switched from the first status to the second status.

In some optional embodiments, the isolation release status may also be switched from the second status to the first status, indicating that isolation is released. Switching the isolation release status from the first status to the second status indicates that the isolation status is entered. In this case, the first total quantity of times is a sum of a quantity of times for which the isolation release status is switched from the first status to the second status and a quantity of times for which the isolation release status is switched from the second status to the first status.

In some optional embodiments, the total quantity of times may be initialized, for example, may be initialized to a preset value (such as 0) when the first security level domain and the second security level domain are powered on and start working. In a subsequent work process, the total quantity of times is increased by 1 each time the access isolation status enters the first status, and the total quantity of times is also increased by 1 each time the isolation release status enters the first status. In this way, the total quantity of times is maintained in a real-time manner. During each cross-domain access, in response to that the access isolation status is the second status, the total quantity of times at this time (which is referred to as the first total quantity of times) is recorded.

In some optional embodiments, the first total quantity of times may be obtained by using a counter and a register. For example, the counter may be connected to a component that generates an interrupt signal, and each time an interrupt signal is generated, the interrupt signal triggers the counter to count once. The counter may also be connected to a register representing the isolation release status (which may be referred to as an isolation release status register). Each time the isolation release status register is updated to the first status, the counter is triggered to count once. The others are deduced by analogy. The counter records the total quantity of times in a real-time manner, and the total quantity of times counted by the counter may be stored by using a times register. In this case, before the access request is transmitted to the second component, the register may be read and the first total quantity of times may be recorded.

Step 20122. Transmit the access request to the second component.

For specific transmission of the access request in step 20122, reference may be made to the foregoing embodiments, and details are not described herein.

After step 20122 of transmitting the access request to the second component, the method further includes the following steps.

Step 401. Detect whether access corresponding to the access request is ended.

In some optional embodiments, the end of the access may be detected based on a quantity of times for which access results need to be transmitted by the second component as required by the access request. For example, if the access request requires the second component to transmit access results 4 times, that is, the first component needs to obtain 4 access results transmitted in 4 times to form a target access result corresponding to the access request, based on a quantity of access results currently obtained, it may be determined whether the access is ended.

In some optional embodiments, the first component may still obtain an access result of the preset result even when bus transmission of the second component is abnormal. Therefore, access results (one or more) obtained after the access of the first component is ended may include at least one of the preset result and the access results actually transmitted by the second component.

Step 402. Obtain the access result corresponding to the access request and record a second total quantity of times in response to that the access is ended, wherein the second total quantity of times is the sum of the quantity of times for which the access isolation status enters the first status and the quantity of times for which the isolation release status enters the first status.

In some optional embodiments, in response to that the access is ended, the first component may obtain access results that correspond to the access request and are transmitted once or multiple times. In this case, the sum of the quantity of times for which the access isolation status enters the first status and the quantity of times for which the isolation release status enters the first status, that is, the second total quantity of times, is recorded again. If there is no exception in the bus transmission status of the second component during this access, the second total quantity of times needs to be consistent with (that is, be same as) the first total quantity of times. If there is an exception in the bus transmission status of the second component, a quantity of times for which the access isolation status enters the first status may be increased, resulting in a change in the total quantity of times. In this case, the second total quantity of times is different from the first total quantity of times.

In some optional embodiments, when the first total quantity of times is the sum of the quantity of times for which the access isolation status is switched from the second status to the first status and the quantity of times for which the access isolation status is switched from the first status to the second status, the second total quantity of times is also the sum of the quantity of times for which the access isolation status is switched from the second status to the first status and the quantity of times for which the access isolation status is switched from the first status to the second status.

In some optional embodiments, when the first total quantity of times is the sum of the quantity of times for which the isolation release status is switched from the first status to the second status and the quantity of times for which the isolation release status is switched from the second status to the first status, the second total quantity of times is also the sum of the quantity of times for which the isolation release status is switched from the first status to the second status and the quantity of times for which the isolation release status is switched from the second status to the first status.

Step 403. Determine an available status of the access result corresponding to the access request based on the first total quantity of times and the second total quantity of times.

The available status may include two statuses: available and unavailable.

In some optional embodiments, if the first total quantity of times is same as the second total quantity of times, it may be determined that no exception occurs to the bus of the second component during this access process. In this case, the access results obtained by the first component are all true access results transmitted by the second component. Otherwise, it is determined that the access result includes the preset result, being available. On this basis, the available status of the access result corresponding to the access request may be determined.

Step 404. Perform processing corresponding to the available status on the access result.

Performing processing corresponding to the available status on the access result may include: if the available status of the access result is available, the access result may be used for subsequent service logic processing. If the available status of the access result is unavailable, the access result cannot be used for subsequent service logic processing. The subsequent service logic processing may be set according to specific functions of the first security level domain, such as service logic processing for a control function and service logic processing for a decision function. This is not specifically limited.

It should be noted that steps 401 and 202 do not have a dependency relationship on an execution order, and may be executed simultaneously or sequentially without any restrictions on the execution order.

According to the embodiments, recording the sum of the quantity of times for which the access isolation status enters the first status and the quantity of times for which the isolation release status enters the first status respectively before the cross-domain access is performed and after the access is ended helps to accurately determine whether the second component has a bus exception during the cross-domain access process and enters the isolation status. In this case, availability of the access result may be effectively determined. Proactively perceiving success of the cross-domain access may provide an accurate and reliable access result for the subsequent service logic processing, thereby ensuring reliability of subsequent service logic.

In some optional embodiments, step 403 of determining the available status of the access result corresponding to the access request based on the first total quantity of times and the second total quantity of times includes:
in response to that the second total quantity of times is same as the first total quantity of times, determining that the available status is available; and in response to that the second total quantity of times is different from the first total quantity of times, determining that the available status is unavailable.

If the second total quantity of times is same as the first total quantity of times, it indicates that no exception occurs to the bus of the second component during this cross-domain access process. Therefore, the access results obtained by the first component are all true access results transmitted by the second component. Therefore, it is determined that the available status of the access result is available. Otherwise, it is determined that the available status of the access result is unavailable.

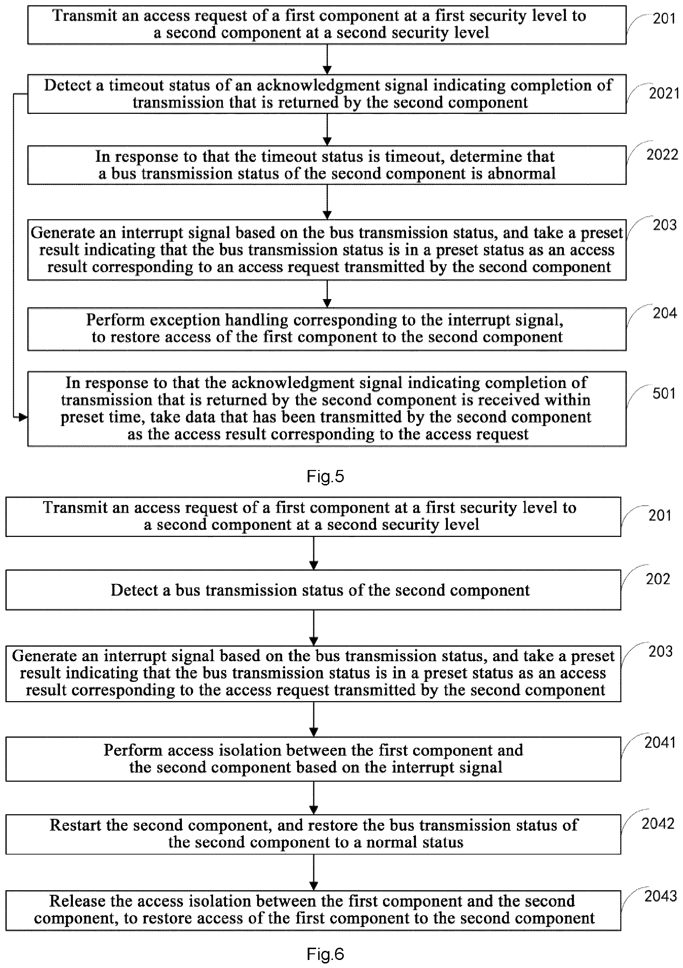

FIG. 5 is a schematic flowchart of a method for cross-domain access according to yet another exemplary embodiment of this disclosure.

In some optional embodiments, step 202 of detecting the bus transmission status of the second component includes the following steps.

Step 2021. Detect a timeout status of an acknowledgment signal indicating completion of transmission that is returned by the second component.

The second component returns transmission data in response to the access request. According to different content of the access request, the second component may transmit once or multiple times. The acknowledgment signal indicating completion of transmission is returned each time after transmission of the data is completed. If an exception occurs to the bus of the second component, the acknowledgment signal cannot be returned. An apparatus in an embodiment of this disclosure may detect the bus transmission status of the second component by detecting the timeout situation of the acknowledgment signal indicating completion of transmission that is returned by the second component. The acknowledgment signal may be any implementable representation, which may be specifically set according to a transmission protocol. This is not limited in the embodiments of this disclosure.

Step 2022. In response to that the timeout status is timeout, determine that the bus transmission status of the second component is abnormal.

The timeout status of the acknowledgment signal is timeout, indicating that the second component cannot return the acknowledgment signal normally. In this case, it may be determined that the bus transmission status of the second component is abnormal (that is, in the preset status).

According to the embodiments, the bus transmission status of the second component may be effectively detected by detecting the timeout status of the acknowledgment signal indicating completion of transmission that is returned by the second component. This helps to proactively detect the bus exception of the second component in a timely manner, so as to perform corresponding exception handling in a timely manner to restore the cross-domain access as soon as possible.

In some optional embodiments, the embodiments of this disclosure further includes the followings step.

Step 501. In response to that the acknowledgment signal indicating completion of transmission that is returned by the second component is received within preset time, take data that has been transmitted by the second component as the access result corresponding to the access request.

If the acknowledgment signal indicating completion of transmission that is returned by the second component is received within the preset time, it indicates that current transmission is successfully completed, and data that has been transmitted by the second component this time may be taken as an access result of single transmission corresponding to the access request. The access result may be returned to a target component initiating the access request in the first component. If the access has not yet ended, it may be kept receiving data and waiting for an acknowledgment signal indicating completion of next transmission, to obtain an access result of the next transmission. Alternatively, when the acknowledgment signal is timed out, the preset result is taken as the access result of this transmission. The others are deduced by analogy, until all access results corresponding to the access request are obtained, thus ending the current access.

According to the embodiments, when the second component can return the acknowledgment signal within the preset time, the data transmitted by the second component may be returned as the access result of this transmission to the target component in the first component, thereby obtaining the true access result. This facilitates the subsequent service logic processing when all access results are transmitted by the second component, thereby ensuring implementation of corresponding functional safety of the vehicle.

FIG. 6 is a schematic flowchart of a method for cross-domain access according to still yet another exemplary embodiment of this disclosure.

In some optional embodiments, step 204 of performing the exception handling corresponding to the interrupt signal includes the following steps.

Step 2041. Perform access isolation between the first component and the second component based on the interrupt signal.

In some optional embodiments, performing access isolation between the first component and the second component is to prevent the first component from performing new cross-domain access to the second component.

In some optional embodiments, the access isolation between the first component and the second component may be implemented by setting the access isolation status to the first status. Before performing the cross-domain access, the access isolation status may be checked first. If the access isolation status is the first status, new cross-domain access is stopped. If the access isolation status is the second status, the new cross-domain access may be performed. The access request may be transmitted to the second component, or the access request may be transmitted to the second component through the isolation component. For details, reference may be made to the foregoing embodiments.

In some optional embodiments, the access isolation status may be stored by using the access isolation status register. For example, setting the access isolation status register to 1 indicates that the access isolation status enters the first status, while setting the access isolation status register to 0 indicates that the access isolation status enters the second status. A specific status value of the access isolation status register may be set according to actual requirements, and is not limited to 1 and 0. For example, the first status may be represented by using 11, and the second status may be represented by using 00; this is not specifically limited.

Step 2042. Restart the second component, and restore the bus transmission status of the second component to a normal status.

In some optional embodiments, restoring of the second component may be controlled by using the processor in the first component, so as to restore the bus transmission status of the second component to normal.

In some optional embodiments, the second component may also be restarted by restarting the second security level domain.

In some optional embodiments, after the second component is restarted, the second component is reset to a default state. The second component may be initialized, so as to enter a normal working status, so that the bus of the second component is restored to normal.

Step 2043. Release the access isolation between the first component and the second component, to restore access of the first component to the second component.

After the bus transmission status of the second component is restored to the normal status, the access isolation between the first component and the second component may be released, so as to restore the cross-domain access of the first component to the second component.

In some optional embodiments, the isolation release status may be maintained in a real-time manner. The isolation release status may include the first status and the second status. That the isolation release status is the first status indicates that isolation is released, and new cross-domain access may be performed. That the isolation release status is the second status indicates that the isolation is not released, and the new cross-domain access is prohibited.

In some optional embodiments, the isolation release status may be maintained by using an isolation release status register. For example, setting the isolation release status register to 1 indicates that the isolation release status enters the first status (that is, the isolation is released), while setting the isolation release status register to 0 indicates that the isolation release status enters the second status (that is, the isolation is not released, or the isolation status is entered). Specific representations of the first status and the second status of the isolation release status are not limited to 1 and 0. This may be specifically set according to actual requirements, and is not limited in the embodiments of this disclosure.

In some optional embodiments, before the access isolation between the first component and the second component is released, the method may further include: confirming whether the cross-domain access corresponding to the current access request is ended; in response to that the access is ended, releasing the access isolation between the first component and the second component; and in response to that the access is not ended, releasing the access isolation between the first component and the second component after the access is ended. In other words, to release the access isolation between the first component and the second component, it is needed to ensure that a bus path of the cross-domain access is in an idle status at this time (not only ongoing cross-domain access needs to be completed, but new cross-domain access also needs to be prohibited). If there is unfinished transmission on the bus, exceptions may be caused to the transmission protocol, resulting in exceptions in the first component.

According to the embodiments, access isolation is performed based on the interrupt signal, so that all new cross-domain access may be effectively prohibited when a bus exception occurs to the second component. Further, the bus transmission status of the second component is restored to the normal status by restarting the second component, which helps to restore the cross-domain access of the first component to the second component in a timely manner, thereby ensuring normal operation of functions of the vehicle.

In some optional embodiments, step 2041 of performing access isolation between the first component and the second component based on the interrupt signal includes:

setting, based on the interrupt signal, an access isolation status of the first component accessing the second component to a first status.

In some optional embodiments, for the access isolation status, reference may be made to the foregoing embodiments, and details are not described herein.

Step 2043 of releasing the access isolation between the first component and the second component includes:

setting an isolation release status to the first status, and/or setting the access isolation status to a second status.

In some optional embodiments, the access isolation may be released through at least one of setting the isolation release status to the first status and setting the access isolation status to the second status.

In some optional embodiments, to obtain the first total quantity of times and the second total quantity of times, the access isolation status may be set to the first status to indicate that the isolation status is entered once, and the isolation release status may be set to the first status to indicate that isolation is released once.

According to the embodiments, maintaining the isolation release status in a real-time manner helps the first component to perform the cross-domain access to the second component in a timely manner, so that the first component is restored a normal functional safety status in a timely manner.

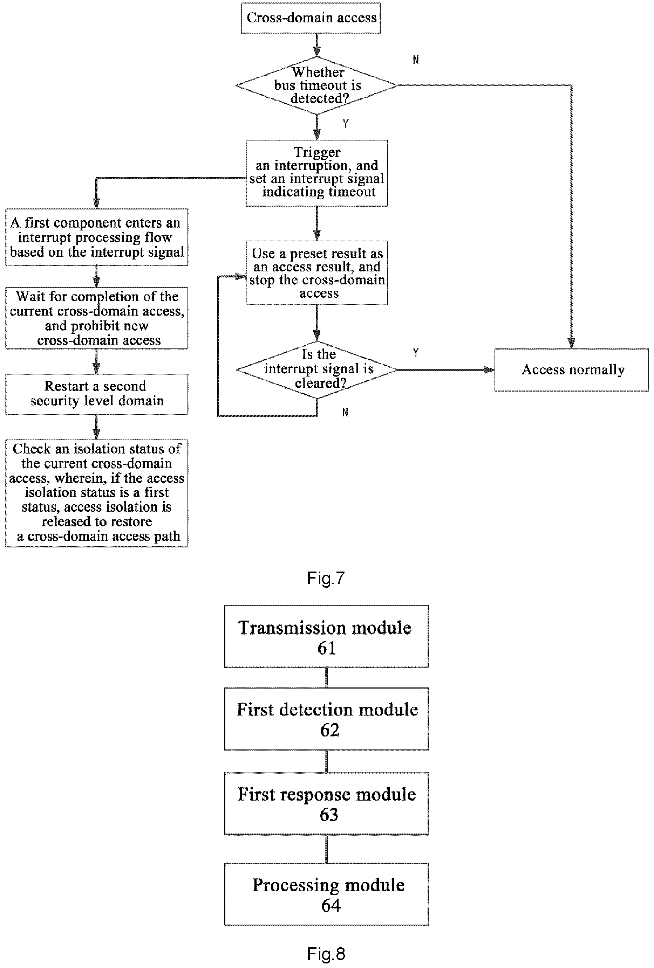

In some optional embodiments, FIG. 7 is a flow block diagram of cross-domain access according to an exemplary embodiment of this disclosure. As shown in FIG. 7, after the cross-domain access is initiated by the first component, bus timeout is detected (that is, whether the acknowledgment signal indicating completion of transmission that is returned by the second component is timed out is detected). If not (N), access is performed normally. In other words, the access result transmitted by the second component is returned normally. If yes (Y), an interruption is triggered, and an interrupt signal indicating timeout is set. The preset result is used as the access result, and the cross-domain access is stopped (that is, new cross-domain access is prohibited). After the interrupt signal is set, the first component enters an interrupt processing flow based on the interrupt signal, waits for completion of the current cross-domain access, and prohibits new cross-domain access. The second security level domain is restarted to restore the bus transmission status of the second component to the normal state. An isolation status of the current cross-domain access is checked, that is, the access isolation status is checked. If the access isolation status is the first status, the access isolation is released to restore a cross-domain access path. After the access isolation is released, the access isolation status is set to the second status, so that the first component can perform new cross-domain access.

The foregoing embodiments of this disclosure may be implemented separately or in any combination without conflict. This may be specifically set according to actual requirements, and is not limited in this disclosure.

Any method for cross-domain access provided in the embodiments of this disclosure can be implemented by any suitable device with a data processing capability, including but not limited to a terminal device and a server. Alternatively, any method for cross-domain access provided in the embodiments of this disclosure can be implemented by the processor. For example, the processor implements any method for cross-domain access described in the embodiments of this disclosure by invoking corresponding instructions stored in a memory. Details are not described below again.

### Exemplary apparatus

FIG. 8 is a schematic diagram of a structure of an apparatus for cross-domain access according to an exemplary embodiment of this disclosure. The apparatus in this embodiment may be configured to implement the corresponding method embodiments for cross-domain access in this disclosure. The apparatus shown in FIG. 8 includes a transmission module 61, a first detection module 62, a first response module 63, and a processing module 64.

The transmission module 61 is configured to transmit an access request of a first component at a first security level to a second component at a second security level.

The first detection module 62 is configured to detect a bus transmission status of the second component.

The first response module 63 is configured to generate an interrupt signal based on the bus transmission status, and take a preset result indicating that the bus transmission status is in a preset status as an access result corresponding to the access request transmitted by the second component.

The processing module 64 is configured to perform exception handling corresponding to the interrupt signal, to restore access of the first component to the second component.

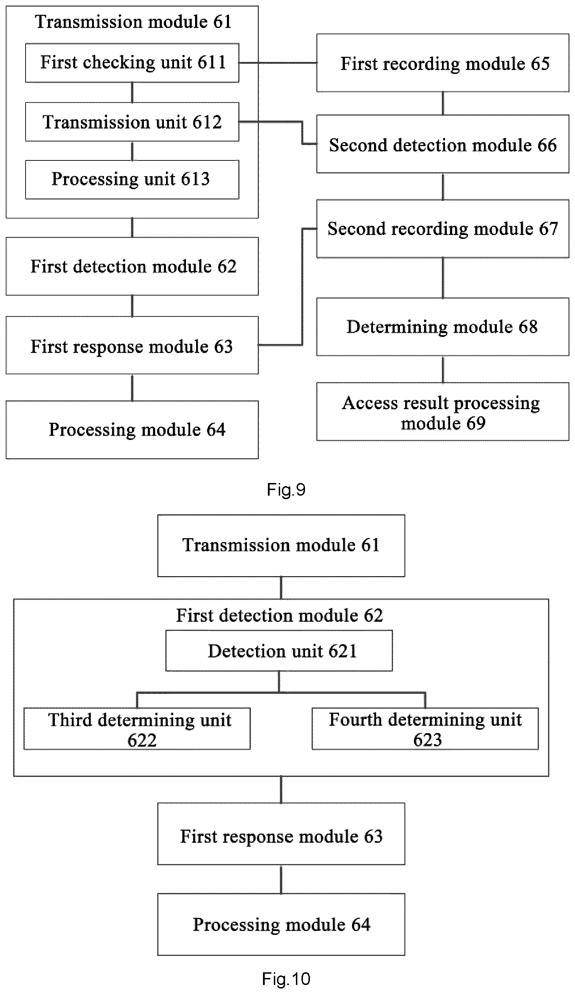

FIG. 9 is a schematic diagram of a structure of an apparatus for cross-domain access according to another exemplary embodiment of this disclosure.

In some optional embodiments, as shown in FIG. 9, the transmission module 61 includes:
a first checking unit 611, configured to check an access isolation status of the first component accessing the second component;
a transmission unit 612, configured to transmit the access request to the second components in response to that the access isolation status is a second status; and
a processing unit 613, configured to stop accessing the second component in response to that the access isolation status is a first status,

In some optional embodiments, as shown in FIG. 9, the apparatus in the embodiments of this disclosure further includes:
a first recording module 65, configured to record a first total quantity of times in response to that the access isolation status is the second status, wherein the first total quantity of times is a sum of a quantity of times for which the access isolation status enters the first status and a quantity of times for which an isolation release status enters the first status.
a second detection module 66, configured to detect whether access corresponding to the access request is ended after the access request is transmitted to the second component;
a second recording module 67, configured to obtain the access result corresponding to the access request and record a second total quantity of times in response to that the access is ended, wherein the second total quantity of times is the sum of the quantity of times for which the access isolation status enters the first status and the quantity of times for which the isolation release status enters the first status;
a determining module 68, configured to determine an available status of the access result corresponding to the access request based on the first total quantity of times and the second total quantity of times; and
an access result processing module 69, configured to perform processing corresponding to the available status on the access result.

In some optional embodiments, the determining module 68 is specifically configured to:
in response to that the second total quantity of times is same as the first total quantity of times, determine that the available status is available; and in response to that the second total quantity of times is different from the first total quantity of times, determine that the available status is unavailable.

FIG. 10 is a schematic diagram of a structure of an apparatus for cross-domain access according to still another exemplary embodiment of this disclosure.

In some optional embodiments, as shown in FIG. 10, the first detection module 62 includes:
a detection unit 621, configured to detect a timeout status of an acknowledgment signal indicating completion of transmission that is returned by the second component; and
a third determining unit 622, configured to determine that the bus transmission status of the second component is abnormal in response to that the timeout status is timeout.

In some optional embodiments, as shown in FIG. 10, the first detection module 62 further includes:
a fourth determining unit 623, configured to take data that has been transmitted by the second component as the access result corresponding to the access request in response to that the acknowledgment signal indicating completion of transmission that is returned by the second component is received within preset time.

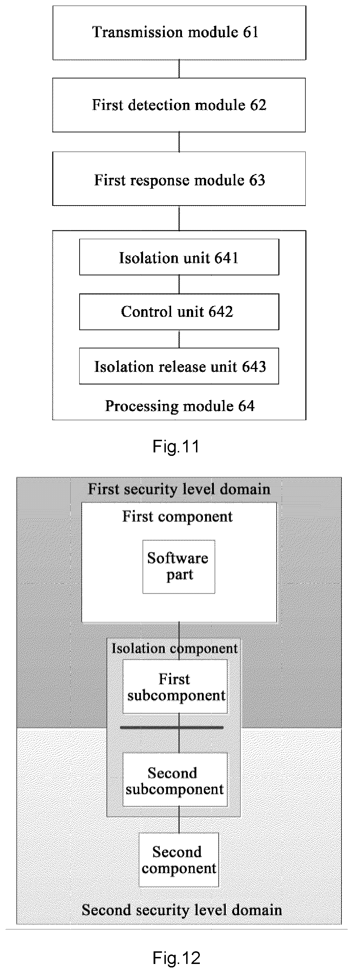

FIG. 11 is a schematic diagram of a structure of an apparatus for cross-domain access according to yet another exemplary embodiment of this disclosure.

In some optional embodiments, as shown in FIG. 11, the processing module 64 includes:
an isolation unit 641, configured to perform access isolation between the first component and the second component based on the interrupt signal;
a control unit 642, configured to restart the second component, and restore the bus transmission status of the second component to a normal status; and
an isolation release unit 643, configured to release the access isolation between the first component and the second component, to restore the access of the first component to the second component.

In some optional embodiments, the isolation unit 641 is specifically configured to set, based on the interrupt signal, an access isolation status of the first component accessing the second component to a first status.

The isolation release unit 643 is specifically configured to set an isolation release status to the first status, and/or set the access isolation status to a second status.

In some optional embodiments, FIG. 12 is a schematic diagram of a structure of an apparatus for cross-domain access according to still yet another exemplary embodiment of this disclosure. As shown in FIG. 12, the apparatus in the embodiments of this disclosure may include an isolation component of hardware and a software part executed in the first component in a first security level domain. The isolation component includes a first subcomponent disposed in the first security level domain and a second subcomponent disposed in a second security level domain. The first subcomponent communicates with the second subcomponent through a bus protocol. The first subcomponent is connected to the first component, and the second subcomponent is connected to the second component. The first subcomponent communicates with the first component through a bus protocol, and the second subcomponent also communicates with the second component through a bus protocol. The software part may be executed in a processor in the first component. Before the first component initiates an access request for cross-domain access, the software may check the current access isolation status, and transmit the access request to the first subcomponent in the isolation component in response to that the access isolation status is the second status. The first subcomponent transmits the access request to the second subcomponent, which transmits the access request to the second component. Access to the second component is stopped in response to that the access isolation status is the first status. Alternatively, the software part sends the access request to the first subcomponent, which checks the current access isolation status. If the current access isolation status is the second status, the first subcomponent transmits the access request to the second subcomponent. If the current access isolation status is the first status, the first subcomponent stops accessing.

The first subcomponent may be responsible for recording a sum (a total quantity of times) of a quantity of times for which the access isolation status enters the first status and a quantity of times for which the isolation release status enters the first status in a real-time manner. When the access isolation status is the second status, the software part may obtain and record the first total quantity of times (referring to the foregoing embodiments) from the first subcomponent before transmitting the access request to the first subcomponent; and in response to that it is detected that access corresponding to the access request is ended, may record the second total quantity of times after the access request is transmitted to the second component, to determine the available status of the access result. Alternatively, the first subcomponent records the first total quantity of times before transmitting the access request to the second subcomponent; and records the second total quantity of times in response to that it is detected that access corresponding to the access request is ended, after the access request is transmitted to the second component, to determine the available status of the access result and return the available status to the software part of the first component, so that the software may perform corresponding processing on the access result based on the available status.

After transmitting the access request to the second subcomponent, the first subcomponent may detect the timeout status of the acknowledgment signal indicating completion of transmission that is returned by the second component. In response to that the timeout status is timeout, it is determined that the bus transmission status of the second component is abnormal, an interruption is triggered, the interrupt signal is set, and the preset result is used as the access result, which is returned to the software part of the first component. The interrupt signal triggers the software part to enter an interrupt processing flow to perform corresponding exception handling, so as to restore the cross-domain access of the first component to the second component. For specific exception handling, reference may be made to the foregoing embodiments, and details are not described herein again.

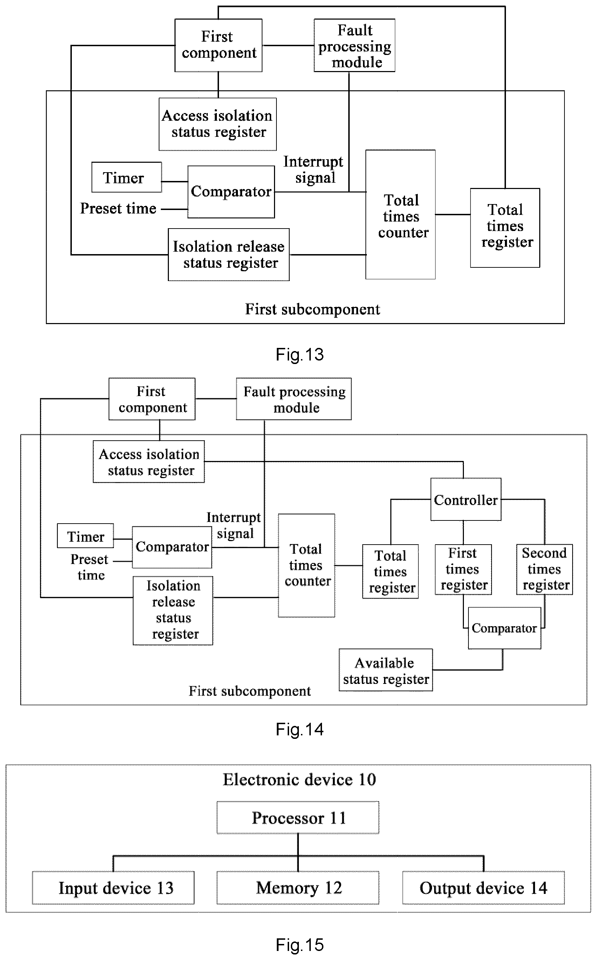

In some optional embodiments, FIG. 13 is a schematic diagram of a structure of a first subcomponent according to an exemplary embodiment of this disclosure. As shown in FIG. 13, the first subcomponent may include a total times counter and a total times register. The total times counter is configured to count a total quantity of times, and the total times register is configured to store the total quantity of times, so that the processor in the first component reads the total quantity of times. The first subcomponent may also include a timer and a comparator. The timer is configured to start timing after the access request is transmitted to the second subcomponent. The comparator is configured to compare time of the timer with the preset time (that is, preset duration). In response to that the time of the timer exceeds the preset time, an interrupt signal, such as a high-level signal, is output. The interrupt signal triggers count of the total times counter to be increased by 1, and the total times register stores a total quantity of times of the total times counter. The first subcomponent may also include an access isolation status register and an isolation release status register. The access isolation status register stores the access isolation status. The isolation release status register stores the isolation release status. The isolation release status and the interrupt signal can both trigger counting of the total times counter, so as to record an accurate total quantity of times in a real-time manner. The access isolation status register and the isolation release status register may be controlled and maintained by the processor in the first component. The first component may also access the total times register, to read the first total quantity of times before the cross-domain access and read the second total quantity of times after the access is ended. The interrupt signal may also be transmitted to a fault processing module, which notifies the software part of the first component to enter the interrupt processing flow.

In some optional embodiments, the first subcomponent may also include a first times register and a second times register, which are respectively configured to record the first total quantity of times and the second total quantity of times. The first times register and the second times register may also be connected to a comparator, to compare the first total quantity of times with the second total quantity of times and output a comparison result. The software part of the first component may read the comparison result to determine the available status of the access result. The first times register and the second times register may be controlled by the first component to write the first total quantity of times and the second total quantity of times, respectively.

In some optional embodiments, FIG. 14 is a schematic diagram of a structure of a first subcomponent according to another exemplary embodiment of this disclosure. As shown in FIG. 14, the first subcomponent may also include a controller for controlling other related components. For example, when the first subcomponent checks the access isolation status and transmits the access request transmitted by the first component to the second subcomponent if the access isolation status is the second status, the controller reads the access isolation status register to determine the access isolation status. For another example, before the first subcomponent transmits the access request to the second subcomponent, the controller reads the total times register to obtain the first total quantity of times, and writes the same into the first times register. After the access is completed, the controller reads the total times register to obtain the second total quantity of times, writes the same into the second times register, and controls the comparator to operate to compare the first total quantity of times with the second total quantity of times, to obtain a comparison result. The first subcomponent may also include an available status register, which is configured to store the comparison result of the first total quantity of times and the second total quantity of times, to serve as the available status of the access result. The first component may read the available status register to determine the available status of the access result.

In some optional embodiments, signal transmission of the first subcomponent and the second subcomponent may cross clock domains. Therefore, cross-clock synchronization may be performed on the second subcomponent to achieve synchronization between the second subcomponent and the first subcomponent.

In actual applications, specific implementation manners for the first subcomponent may be set according to actual requirements, which are not limited to the foregoing implementation manners in FIG. 13 and FIG. 14.

For beneficial technical effects corresponding to the exemplary embodiments of this apparatus, reference may be made to the corresponding beneficial technical effects in the part of exemplary method described above, and details are not described herein again.

### Exemplary electronic device

FIG. 15 is a schematic diagram of a structure of an electronic device according to an embodiment of this disclosure. The electronic device includes at least one processor 11 and a memory 12.

The processor 11 may be a central processing unit (CPU) or another form of processing unit having a data processing capability and/or instructions execution capability, and may control another component in the electronic device 10 to implement a desired function.

The memory 12 may include one or more computer program products. The computer program product may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 11 may execute one or more of the program instructions to implement the methods according to various embodiments of this disclosure that are described above and/or other desired functions.

In an example, the electronic device 10 may further include an input device 13 and an output device 14. These components are connected to each other through a bus system and/or another form of connection mechanism (not shown).

The input device 13 may further include, for example, a keyboard and a mouse.

The output device 14 may output various information to the outside, and may include, for example, a display, a speaker, a printer, a communication network, and a remote output device connected by the communication network.

Certainly, for simplicity, FIG. 15 shows only some of components in the electronic device 10 that are related to this disclosure, and components such as a bus and an input/output interface are omitted. In addition, according to specific application situations, the electronic device 10 may further include any other appropriate components.

In some optional embodiments, embodiments of this disclosure provide an electronic device, which includes the apparatus for cross-domain access according to any one of the foregoing embodiments.

### Exemplary computer program product and computer readable storage medium

In addition to the foregoing methods and devices, the embodiments of this disclosure may also provide a computer program product, which includes computer program instructions. When the computer program instructions are run by a processor, the processor is enabled to perform the steps, of the methods according to the embodiments of this disclosure, that are described in the "exemplary method" part described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by a processor, the processor is enabled to perform the steps, of the methods according to the embodiments of this disclosure, that are described in the "exemplary method" part described above.

The computer readable storage medium may be one readable medium or any combination of a plurality of readable media. The readable medium may be a readable signal medium or a readable storage medium. The readable storage medium includes, for example, but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A method for cross-domain access, **characterized in that** the method for cross-domain access comprises:
transmitting (201) an access request of a first component at a first security level to a second component at a second security level;
detecting (202) a bus transmission status of the second component;
generating (203) an interrupt signal based on the bus transmission status, and taking a preset result indicating that the bus transmission status is in a preset status as an access result corresponding to the access request transmitted by the second component; and
performing (204) exception handling corresponding to the interrupt signal, to restore access of the first component to the second component.

2. The method according to claim 1, wherein the performing (204) exception handling corresponding to the interrupt signal comprises:
performing (2041) access isolation between the first component and the second component based on the interrupt signal;
restarting (2042) the second component, and restoring the bus transmission status of the second component to a normal status; and
releasing (2043) the access isolation between the first component and the second component, to restore access of the first component to the second component.

3. The method according to claim 2, wherein the performing (2041) access isolation the first component and the second component based on the interrupt signal comprises:
setting, based on the interrupt signal, an access isolation status of the first component accessing the second component to a first status; and
the releasing the access isolation between the first component and the second component comprises:
setting an isolation release status to the first status, and/or setting the access isolation status to a second status.

4. The method according to any one of claims 1 to 3, wherein the transmitting (201) an access request of a first component at a first security level to a second component at a second security level comprises:
checking (2011) an access isolation status of the first component accessing the second component; and
transmitting (2012) the access request to the second component in response to that the access isolation status is a second status; and
the method further comprises:
stopping (301) accessing the second component in response to that the access isolation status is a first status.

5. The method according to claim 4, wherein before the transmitting the access request to the second component, the method further comprises:
recording (20121) a first total quantity of times in response to that the access isolation status is the second status, wherein the first total quantity of times is a sum of a quantity of times for which the access isolation status enters the first status and a quantity of times for which the isolation release status enters the first status; and
after the transmitting (20122) the access request to the second component, the method further comprises:
detecting (401) whether access corresponding to the access request is ended;
obtaining (402) the access result corresponding to the access request and recording a second total quantity of times in response to that the access is ended, wherein the second total quantity of times is the sum of the quantity of times for which the access isolation status enters the first status and the quantity of times for which the isolation release status enters the first status;
determining (403) an available status of the access result corresponding to the access request based on the first total quantity of times and the second total quantity of times; and
performing (404) processing corresponding to the available status on the access result.

6. The method according to claim 5, wherein the determining (403) an available status of the access result corresponding to the access request based on the first total quantity of times and the second total quantity of times comprises:
in response to that the second total quantity of times is same as the first total quantity of times, determining that the available status is available; and
in response to that the second total quantity of times is different from the first total quantity of times, determining that the available status is unavailable.

7. The method according to any one of claims 1 to 6, wherein the detecting (202) a bus transmission status of the second component comprises:
detecting (2021) a timeout status of an acknowledgment signal indicating completion of transmission that is returned by the second component; and
in response to that the timeout status is timeout, determining (2022) that the bus transmission status of the second component is abnormal.

8. The method according to claim 7, further comprising:
in response to that the acknowledgment signal indicating completion of transmission that is returned by the second component is received within preset time, taking (501) data that has been transmitted by the second component as the access result corresponding to the access request.

9. An apparatus for cross-domain access, **characterized in that** the apparatus for cross-domain access comprises:
a transmission module (61), configured to transmit an access request of a first component at a first security level to a second component at a second security level;
a first detection module (62), configured to detect a bus transmission status of the second component;
a first response module (63), configured to generate an interrupt signal based on the bus transmission status, and take a preset result indicating that the bus transmission status is in a preset status as an access result corresponding to the access request transmitted by the second component; and
a processing module (64), configured to perform exception handling corresponding to the interrupt signal, to restore access of the first component to the second component.

10. The apparatus according to claim 9, wherein the processing module (64) comprises:
an isolation unit (641), configured to perform (2041) access isolation between the first component and the second component based on the interrupt signal;
a control unit (642), configured to restart (2042) the second component, and restore the bus transmission status of the second component to a normal status; and
an isolation release unit (643), configured to release (2043) the access isolation between the first component and the second component, to restore the access of the first component to the second component.

11. The apparatus according to claim 9 or 10, wherein the transmission module (61) comprises:
a first checking unit (611), configured to check an access isolation status of the first component accessing the second component;
a transmission unit (612), configured to transmit the access request to the second components in response to that the access isolation status is a second status; and
a processing unit (613), configured to stop accessing the second component in response to that the access isolation status is a first status.

12. The apparatus according to any one of claims 9 to 11, wherein the first detection module (62) comprises:
a detection unit (621), configured to detect a timeout status of an acknowledgment signal indicating completion of transmission that is returned by the second component; and
a third determining unit (622), configured to determine that the bus transmission status of the second component is abnormal in response to that the timeout status is timeout.

13. The apparatus according to claim 12, wherein the first detection module (62) further comprises:
a fourth determining unit (623), configured to take data that has been transmitted by the second component as the access result corresponding to the access request in response to that the acknowledgment signal indicating completion of transmission that is returned by the second component is received within preset time.

14. A computer readable storage medium, **characterized in that** the storage medium stores a computer program, and the computer program is used for implementing the method for cross-domain access according to any one of claims 1 to 8.

15. An electronic device (10), **characterized in that** the electronic device comprises:
a processor (11); and
a memory (12), configured to store processor-executable instructions, wherein
the processor is configured to read the executable instructions from the memory (12), and execute the instructions to implement the method for cross-domain access according to any one of claims 1 to 8; or
the electronic device comprises the apparatus for cross-domain access according to any one of claims 9 to 13.
